# EUROPEAN PATENT SPECIFICATION

(11) **EP 1 207 700 B1**
(45) Date of publication and mention of the grant of the patent: **26.12.2007**
(21) Application number: 01121494.7
(22) Date of filing: 07.09.2001
(51) Int. Cl.: H04N 7/173, H04N 7/16

(54) **System and method for managing a coupon**
Verfahren und System zur verwaltung eines Gutscheins
Système et procédé pour la gestion d'un coupon

(30) Priority: 15.11.2000 JP 2000352554
(43) Date of publication of application: 22.05.2002
(73) Proprietor: Hitachi, Ltd., Chiyoda-ku Tokyo 101-8010 (JP)
(72) Inventor: Ukai, Hiromi, Hitachi, Ltd., Intellectual, Tokyo 100-8220 (JP); Ono, Toshiyuki, Hitachi, Ltd., Intellectual, Tokyo 100-8220 (JP); Ushiki, Akifumi, Hitachi, Ltd., Intellectual, Tokyo 100-8220 (JP); Arai, Tatsuro, Hitachi, Ltd., Intellectual, Tokyo 100-8220 (JP)
(74) Representative: Strehl Schübel-Hopf & Partner

(56) References cited:
- EP-A- 0 833 511
- JP-A- 2002 236 835
- US-A- 5 978 013
- ANONYMOUS: "Electronic Coupon Smart Cards for Internet PCs and Interactive TVs" RESEARCH DISCLOSURE, KENNETH MASON PUBLICATIONS, HAMPSHIRE, GB, vol. 41, no. 414, 1 October 1998 (1998-10-01), page 1 XP002178560 ISSN: 0374-4353

## Description

### BACKGROUND OF THE INVENTION

### Field of the Invention

The present invention relates to a system and a method for managing a coupon transmitted or broadcasted using a network or radio wave. More particularly, the invention relates to a system and a method for managing a coupon which permits effective use of electronic coupon distribution history and program information for marketing (for example, audience rating measurement of program or commercial message, broadcasting period, number of times, determination of fee and so forth) when the electronic coupon is distributed, obtained or used through broadcasting.

### Description of the Related Art

In EP-A-0 833 511 as prior art, a coupon indirect information as information for issuing coupon is broadcasted from a service provider system of a center. A broadcasted information receiving terminal device of audience receives and accumulates the coupon indirect information and issues a coupon. Also, EP-A-0 833 511 also discloses notifying of individual information of the audience or the like to a coupon issuer, classifying the coupon in audience rating survey of broadcasted programs with taking classification information in the coupon indirect information as particular classification content, and classifying the coupon with specifying classification information in the coupon indirect information to information of sponsor presenting the broadcasted program and so forth.

On the other hand, in the broadcasting system, information what reaction the audience had for the program, is important. Conventionally, as information for judgment of reaction to the program, audience rate of the broadcasted program has been used. Since it can be judged that the program having high program audience rate should have large effect of a commercial message (CM). Therefore, it becomes easy to fond sponsors who are willing to invest for such program. Also, the CM fee is determined with taking program audience rate as indicia, such that broadcasting fee for CM becomes higher at a time zone when program audience rate is high. A method for audience rating survey has been disclosed in JP-A-11-275607.

In the invention disclosed in EP-A-0 833 511, coupon for sales promotion of commercial products is used. However, it has not been considered to use the coupon for the purpose other than sales promotion (for example, survey of program audience rate or advertisement effect, marketing and so forth).

On the other hand, a method for determining CM fee as indicia of a program audience rate is to determine CM fee depending upon the audience rate of the program, in which the commercial message is to be inserted, and not to determine the CM fee depending upon the audience rate of the commercial message actually broadcast or the audience rate of the program, in which the commercial message has been inserted. Therefore, it is possible that the sponsor may not attain the advertisement effect comparable with the CM fee.

### SUMMARY OF THE INVENTION

The object of the present invention is to provide a coupon management system as defined in claim 1 and an audience data survey method as defined in claim 11.

The present invention transmits or broadcasts coupon information together with a program or commercial message from a broadcasting/transmitting system to a receiving system. The receiving system generates a coupon issuance request on the basis of the coupon information, attaches the identifier of the program or commercial message for which the coupon issuance request is demanded, to the coupon issuance request, transmits the coupon issuance request added the identifier from the receiving system to a service center. The service center issues the coupon on the basis of the coupon issuance request and calculates number of issued coupons per the program or commercial message. It should be noted that the broadcasting/transmitting system attaches identifier of the program or commercial message to be broadcasted or transmitted together with the coupon information, to the coupon information in order to broadcast or transmit the coupon information attached with the identifier from the broadcasting/transmitting system to the receiving system.

The present invention transmits or broadcasts coupon information together with a program or commercial message from a broadcasting/transmitting system to a receiving system. The receiving system adds the identifier of the program or commercial message on which the coupon is displayed, to the coupon. A coupon affiliated store terminal checks used of the coupon and use checked coupon and the coupon use status are transmitted from the coupon affiliated store terminal to a service center. The service center calculates number of used coupons per the program or commercial message on the basis of the use checked coupon and the coupon use status. It should be noted that the broadcasting/transmitting system may attach an identifier of the program or commercial message to be broadcasted or transmitted together with the coupon to the coupon, and the coupon attached with the identifier may be broadcasted or transmitted from the broadcasting/transmitting system to the receiving system.

The present invention determines period, number of times or fee for broadcasting or transmitting the program or commercial message depending upon the number of the issued coupons or used coupons.

### BRIEF DESCRIPTION OF THE DRAWINGS

The present invention will be understood more fully from the detailed description given hereinafter and from the accompanying drawings of the preferred embodiment of the present invention, which, however, should not be taken to be limitative to the invention, but are for explanation and understanding only.

In the drawings:
Fig. 1 is a block diagram showing overall construction of the first embodiment of a system according to the present invention;
Figs. 2A and 2B are tables showing data structure of coupon distribution history data in the present invention;
Figs. 3A, 3B and 3C are tables showing data structure of analysis result data in the present invention;
Figs. 4A, 4B and 4C are illustration showing transition screen on audience side in the case where a coupon according to the present invention is received;
Figs. 5A and 5B are illustration showing a coupon and coupon information of the present invention;
Fig. 6 is a block diagram showing overall construction of the second embodiment of a system according to the present invention; and
Fig. 7 is an illustration showing a structure of verification screen on audience side upon embedding audience attribute of the present invention.

### DESCRIPTION OF THE EMBODIMENTS

The present invention will be discussed hereinafter in detail in terms of the preferred embodiment of the present invention with reference to the accompanying drawings. In the following description, numerous specific details are set forth in order to provide a thorough understanding of the present invention. It will be obvious, however, to those skilled in the art that the present invention may be practiced without these specific details. In other instance, well-known structure are not shown in detail in order to avoid unnecessary obscurity of the present invention.

In bidirectional broadcasting system, an electronic coupon information is broadcasted together with a program. When an electronic coupon is demanded to a service center from an audience, information which program is watched, sexuality and age of audience, and so forth is managed in the service center per demanded coupon. For each coupon to be issued, individual number (ID) is assigned so as to see which coupon is used after collecting the coupon. On the other hand, without routing via the service center, the broadcasted or transmitted coupon may be stored in a receiver. In such case, upon storing the coupon, the watched program name, sexuality and age of audience and so forth are added to the coupon as related information. After collecting the coupon, the related information is managed in the service center. In the service center, statistics, such as number of coupons issued or used, sexuality and age of the user (audience) and so forth, is made per each program to be broadcasted, and analysis of activities of the users is made on the basis of information depending upon difference of degree of interest to the program based on the profile, such as sexuality or age and so forth and information of equipment used for carrying coupon and a period from obtaining of the coupon to use. Here, the bidirectional broadcasting system is a system in which a receiver of the audience is connected to an internet and to perform action through internet relative to information obtained through a broadcasted radio wave. It should be noted that broadcasting program by radio wave may be transmitted through an electrical circuit (including radio circuit and wired circuit), such as internet or the like.

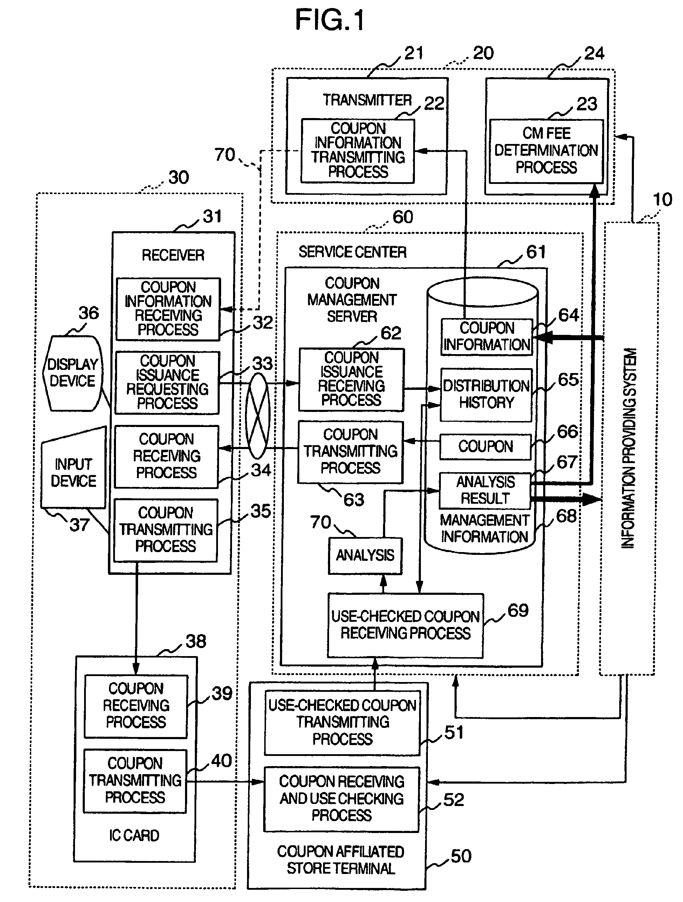

The first embodiment of the present invention will be discussed hereinafter with reference to Figs. 1 to 5.

Fig. 1 is a block diagram showing overall construction of a system including a information providing system, a broadcasting/transmitting system, a receiving system, the service center and a terminal of affiliated store of the coupon.

An information provider system 10 is a system to be used by an information provider. The information provider is a sponsor, or the like for a program to be broadcasted or transmitted, and pays a commercial message broadcasting or transmitting fee to a broadcaster transmitter for broadcasting or transmitting commercial message. A broadcasting/transmitting system 20 is a system to be used by a broadcaster/transmitter for broadcasting or transmitting coupon information together with the program or commercial message. The broadcaster/transmitter is a broadcaster, an application service provider, or an internet service provider, for example. A receiving system 30 is a system to be used by a receiver for receiving the program or commercial message and coupon information. The receiver is an audience of the program or commercial message, for example. A service center 60 is a system to be used by a service provider managing the coupon. A coupon affiliated store terminal 50 is a system accepting use of the coupon. The broadcasting/transmitting system 20 and the service center 60, the receiving system 30 and the service center 60, the coupon affiliated store terminal 50 and the service center 60 are connected by open network or dedicated network. The broadcasting/transmitting system 20 and the receiving system 30 are preferably connected via a broadcasted radio wave, but may be connected through open network or dedicated network. The information provider system 10 and the broadcasting/transmitting system 20, and the information provider system 10 and the service center 60 are connected by the open network or dedicated network. The broadcasting/transmitting system 20 and the service center 60 may be integral. Namely, the broadcaster/transmitter may use or possess the broadcasting/transmitting system 20 and the service center 60.

The broadcasting/transmitting system 20 has a transmitter 21 broadcasting/transmitting the program or commercial message and the coupon information, and a computer 24 determining a period, number of times or fee for broadcasting/transmitting program or commercial message depending upon number of coupons issued or used. The receiving system 30 includes a receiver 31 for receiving the program or commercial message and the coupon information, a display device 36 displaying the program or commercial message and the coupon information, an input device 37 (remote controller, keyboard, mouse, pen, touch panel and so on) receiving input from audience or the like, and an IC card 38 downloading a coupon from the receiver 31. The service center 60 has a coupon management server 61 managing the coupon.

The information provider system 10 requests broadcasting/transmission of the program and commercial message under the payment of the commercial message broadcasting fee to the broadcaster/transmitter. When the information provider system 10 desires providing of coupon to the audience, a coupon information 64 is provided to the service center 60. The coupon information is data for making the service center 60 to generate a coupon issuance request. A coupon management server 61 is provided in the service center 60 for managing management information 68 relating to the coupon. In the management information 68, a coupon information 10, a distribution history 65 of the coupon, the coupon 66 and a analysis result 67 of the distribution history 65 to be presented to the information provider 10, are stored. After storing the management information 68 in the coupon information 64, the coupon information 64 is broadcasted/transmitted by a transmitter 21 of the broadcasting/transmitting system 20 (coupon information transmission process 22). For example, when the program or the commercial message and the coupon information are broadcasted utilizing satellite digital broadcasting, communication satellite broadcasting or wire broadcasting, the coupon information is preferably broadcasted by a data broadcasting. The coupon information may be broadcasted/transmitted independently of the program or commercial message and may be broadcasted/transmitted in association with the program or commercial message. When the receiver 31 has a accumulating function, it is possible to accumulate at least one of data of the program or commercial message and the coupon information to display the coupon information in association with displaying the program or commercial message.

The receiver 31 has a function for receiving the program or the commercial message, a function for receiving the data broadcasting, a function for receiving broadcasting schedule to be broadcasted by the data broadcasting as an electronic program guide, and a function for storing a personal information of audience (audience attribute), such as name, age, sexuality, address or residence, contact address (telephone number, mail address) credit card number and so forth. The audience information may also be stored in an IC card (which is different from the IC card 38) detachably loaded on the receiver 31. The receiver 31 receives the coupon information (coupon information receiving process 32) to display on the display device 36 for presenting to the audience.

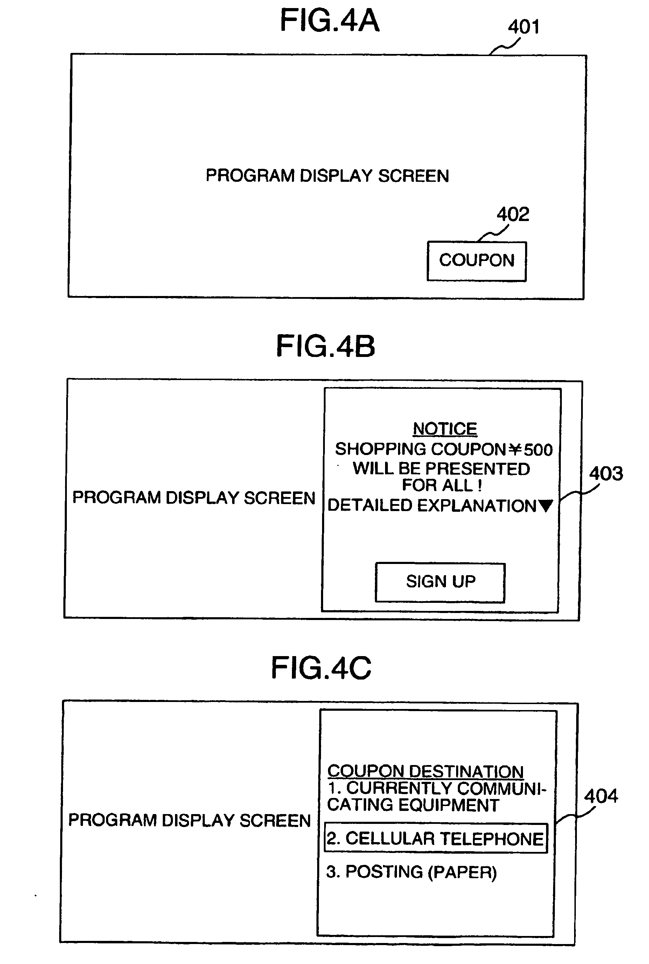

Figs. 4A to 4C are illustrations showing a structure of transition screen on the side of audience when the coupon according to the present invention is received. The display device 36 displays coupon information 402 on a program display screen 401 (Fig. 4A). When the audience designates the coupon information 402, the display device 36 displays detailed information 403 of the coupon (including application button for requesting the coupon) (Fig. 4B). Before connection to the service center 60, the display device 36 displays "obtainer" information with reference to audience information stored in the receiver 31, and "program name", "broadcasting date and time (and time zone)". Preferably, the display device 36 also displays information whether "obtainer" information, "program name", ("broadcasting date and time" and so forth may be added to a coupon issuance request for requesting issuance of the coupon to the service center 60. When the receiver 31 obtains answer that the "obtainer" information may be added to the coupon issuance request from the audience, the coupon issuance request is generated on the basis of the coupon information, "obtainer" information and so forth to transmit the coupon issuance request to the service center 60. The service center 60 generates an audience program information of the audience and audience attribute as the distribution history 65 and stores the distribution history 65 in the coupon management server 61.

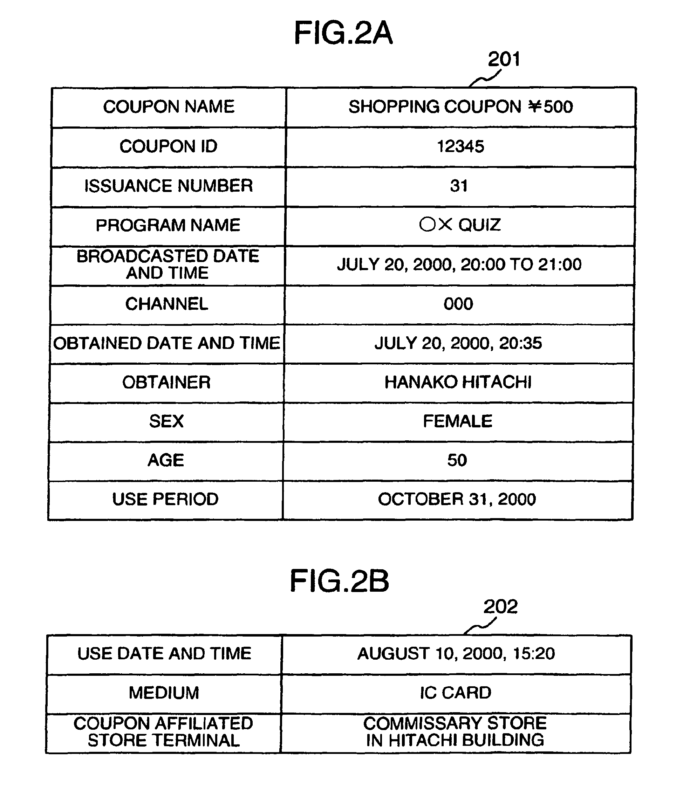

When the coupon information and the program or commercial message are broadcasted/transmitted independently of each other, the information relating to the program or commercial message (Fig. 2A) is added to the coupon issuance request in the receiver 31 upon transmission of the coupon issuance request. When the coupon information and the program or commercial message are broadcasted or transmitted in association, the information relating to the program or commercial message at the time of transmission of the coupon issuance request may be added to the coupon issuance request in the receiver 31 or the program or commercial message upon transmission of the coupon issuance request may be added to the coupon issuance request in the broadcasting/transmitting system 20, or in the alternative, the information relating to the program or commercial message may be broadcasted or transmitted to the service center 60 in association with broadcasting or transmission of the coupon information. The service center 60 manages the information relating to the program or commercial message with taking the coupon ID as a key.

Figs. 2A and 2B are illustration showing structure of the distribution history of the coupon according to the present invention. A distribution history data 201 at the time of issuance of the coupon includes a coupon name, a coupon ID for identifying the coupon, an issuance number of the coupon, the program name (identifier for identifying the program), program broadcasting date and time (time zone), a channel of the program, sexuality of the obtainer, age of the obtainer, a use period of the coupon (period or date when the coupon is valid) (Fig. 2A). Furthermore, the program ID may be added.

The service center 60 preliminarily stores the coupon 66 in the coupon management server 61. The service center 60 generates a coupon information 64 on the basis of the coupon 66. For example, with incorporating the coupon ID in the coupon information 64, the coupon information 64 and the coupon 66 are correlated. Upon accepting the coupon issuance request, the service center 60 selects the coupon 66 corresponding to the coupon issuance request (e.g. the coupon 66 having the same coupon ID as the coupon ID in the coupon issuance request) to generate the coupon 66. The service center 60 transmits the coupon 66 to the receiver 31 which transmitted the coupon issuance request (coupon transmitting process 63). It should be noted that when the receiver (e.g. cellular telephone, portable information terminal, personal computer and so forth) other than the receiver 31 transmitted the coupon issuance request is designated as destination for sending the coupon, the service center 60 transmits the coupon 66 to the designated receiver. An address of the cellular telephone, the portable information terminal, the personal computer or the like may be transmitted with the coupon issuance request, or in the alternative, may be preliminarily stored as personal information of the audience by the service center 60. When delivery of the coupon by post is designated, the service center 60 mails an envelop containing the coupon to the designated recipient at designated address or residence. When a terminal other than a receiver 34 is designated as a recipient, the service center 60 is provided with a function for transmitting the coupon to the cellular telephone or for printing the coupon on a paper for posting so that the audience 30 may designate destination of the coupon to be sent, as shown in Fig. 4C.

The receiver 31 receives the coupon 66 transmitted from the service center 60 (coupon receiving process 34). When the coupon is printed on the paper, it is preferred to additionally print a bar code indicative of a number unique to each coupon or to embed it by electronic-watermarking so that the printed coupon may be electronically processed after collection.

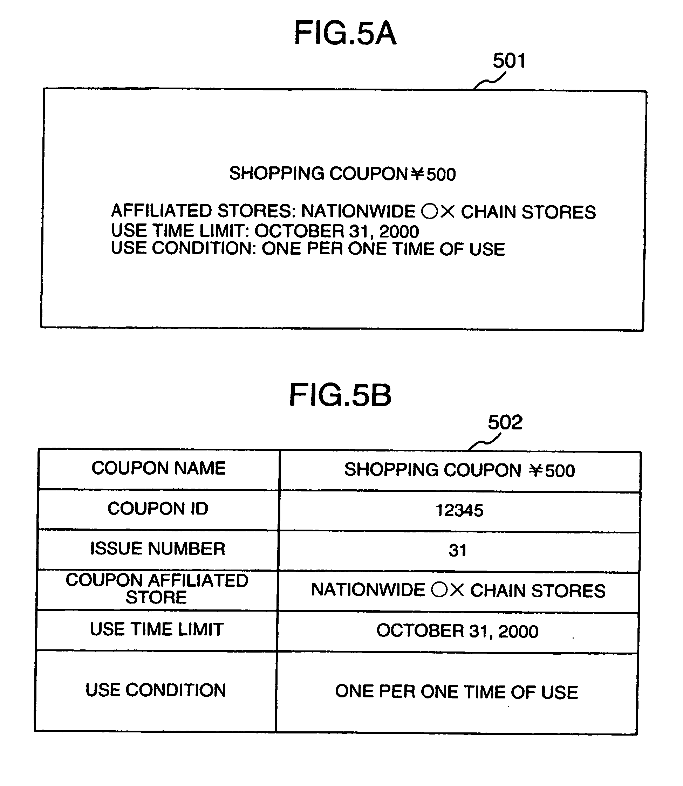

Figs. 5A and 5B are illustration showing structures of the coupon and the coupon information according to the present invention. The coupon 66 contains a coupon name, the coupon ID, issuance number of the coupon, coupon accepting affiliated stores, use period of the coupon, use condition of the coupon (Fig. 5B). Amongst, on the display screen of the display device 36 or the like, the coupon name, name of coupon accepting affiliated store, coupon use period, coupon use condition are displayed (Fig. 5A). The coupon 66 received by the receiver 31 is downloaded to the IC card 38, portable information terminal or the like to carry to the store for use. In the alternative, when means for use with the receiver 31, the coupon may be used in the receiver 31. Here, the following discussion will be given for the case where the coupon is downloaded to the IC card 38 and the IC card 38 is carried to the store for use.

The receiver 31 transmits the coupon 66 to the IC card 38 loaded therein. When the IC card 38 is provided with communication function, the receiver 31 and the IC card 38 may be connected by wire or radio. The IC card 38 receives the coupon 66 (coupon receiving process 39). The audience carries the IC card 38 storing the coupon 66 to the store. Upon use of the coupon 66, the audience inserts the coupon to coupon affiliated store terminal 50 (coupon transmitting process 40).

Upon reception of the coupon, the coupon affiliated store terminal 50 checks the coupon to indicate "used" so as to avoid redundant use of the coupon (coupon receiving and use checking process 52). The coupon affiliated store terminal 50 transmits the use-checked coupon to the coupon management server 61 of the service center 60 (use-checked coupon transmitting process 51). In the alternative, the coupon affiliated store terminal 50 may transmit coupon use status for identifying used coupon to the service center 60.

The coupon management server 61 receives the use checked coupon 66 (use-checked coupon receiving process 69). The service center 60 updates the distribution history 65 on the basis of the use-checked coupon 66. A distribution history data 202 upon use of the coupon includes coupon use date and time, coupon use medium, name of coupon accepting affiliated store (coupon affiliated store terminal) (Fig. 2B). The distribution history data 202 upon use of the coupon is added to the distribution history data 201 upon issuance of the coupon for updating the distribution history 65. The service center 60 performs analysis on the basis of the distribution history 65 in response to a demand for analysis (analyzing process 70). For example, the number of issued coupons per the program or commercial message and the number of used coupons per the program or commercial message are analyzed. The service center 60 transmits the analysis result 67 to the information provider system 10 and the broadcasting/transmitting system 20. The service center 60 obtains fees associating with coupon management and analysis from the information provider system 10.

The broadcasting/transmitting system 20 calculates the number of times or period for broadcasting the program or commercial message or the fee for broadcasting the program or commercial message on the basis of analysis result 67 (CM fee and the like determination process 23). For example, the number of times of broadcast the program or commercial message becomes greater when the number of issued coupon and the number of used coupon per the program or commercial message are large than that when the number of issued coupons and the number of used coupons per the program or commercial message are small. Also, the period to broadcast the program or commercial message becomes longer when the number of issued coupons and the number of used coupons per the program or commercial message are large than that when the number of issued coupons and the number of used coupons per the program or commercial message are small. Furthermore, the fee becomes higher when the number of issued coupon and the number of used coupon per the program or commercial message are larger that that when the number of issued coupons and the number of used coupons per the program or commercial message are small. For example, it may also be possible to continue broadcasting or transmitting the program or commercial message until the number of issued coupons and the number of used coupons reach predetermined number. The broadcasting/transmitting system 20 charges a broadcasting/transmitting fee calculated on the basis of the analysis result 67 to the information provider system 10. Namely, the broadcasting/transmitting system 20 tolls a broadcasting/transmitting fee depending upon the audience rate of the program or commercial message actually broadcasted or transmitted from the information provider.

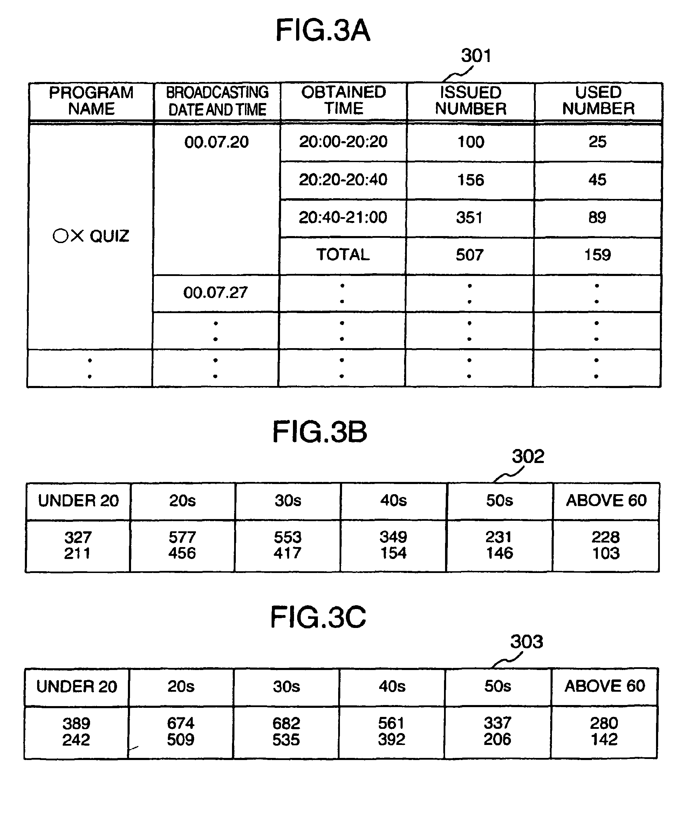

Figs. 3A to 3C show a structure of analysis result data of the present invention. Fig. 3A shows the analysis result data collected in which time zones the coupons are obtained when the coupon can be obtained at any time. From the collected data, the analysis can be made on which date and in which time zone the large number of people obtain the coupon. Furthermore, by comparing the content of program in the time zone with the degree of reaction, the correlation between the program content and the reaction to the coupon can be derived. Fig. 3B shows the analysis result data summing up the number of coupon obtainers and the number of users per age group of men. Fig. 3C shows the analysis result data summing up the number of coupon obtainers and the number of users per age group of women. From statistics thus obtained, it can be analyzed, in which age group of men/women, the large number of coupon users belong to.

Other than the results shown in Figs. 3A to 3C, for example, by statistically collecting the data of periods from the time of obtaining the coupon to the time of using the coupon per age group, the quickness of reaction to the CM can be analyzed. In the alternative, it is also possible to make analysis of information on the correlation between the media/equipments through which the coupons are used with the broadcasting time zone of the audience program and so on, to permit the analysis of statistical information in multiple angle for performing the analysis of activity pattern per age or sexuality. Furthermore, by collecting the coupon use history of individual, the personal preference of individual can be analyzed by performing the analysis of the tendency of watched programs and the used coupons. While discussion has been given hereinabove for the embodiment where coupons are distributed, it is also considered another embodiment to manage the number unique to the coupon by the service center 60 and to distribute the number data in place of the coupon per se instead of distributing the coupon.

The first embodiment of the present invention had been heretofore discussed. With the shown embodiment, the number of issued coupons and the number of used coupons per the program or commercial message, the audience rate of the program or commercial message can be measured, and thus the advertisement effect of the program or commercial message can be directly measured. It is also possible to provide new advertisement providing method for continuously broadcasting or transmitting the advertisement until a given advertisement effect can be obtained. For example, it is possible to continue broadcasting the coupon information until a given number of coupons are issued or collected. On the other hand, it is also possible to obtain the information of the audiences when the coupons are not used after the coupons are obtained with interest. Accordingly, for the broadcaster/transmitter or information provider, the personal tastes and the advertisement effects may be measured utilizing the coupon to efficiently perform marketing. The audiences can obtain the coupons easily in case of necessity by requesting the service center to transmit the coupons to the cellular telephones. On the other hand, since the program name and the user name are not written in the coupon, the coupon can be used without causing the leakage of personal information to the third party, such as the coupon affiliated store terminal.

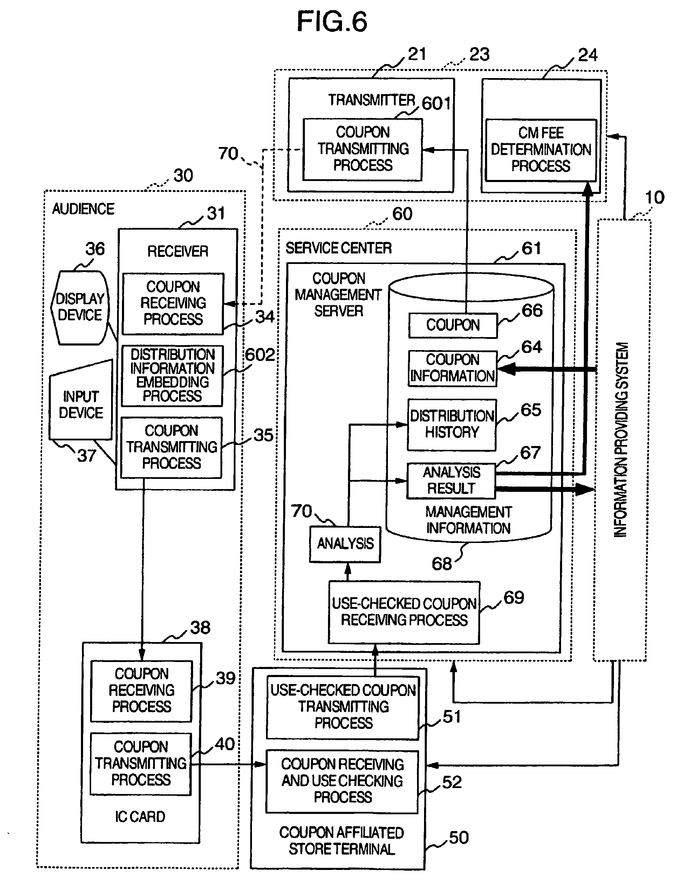

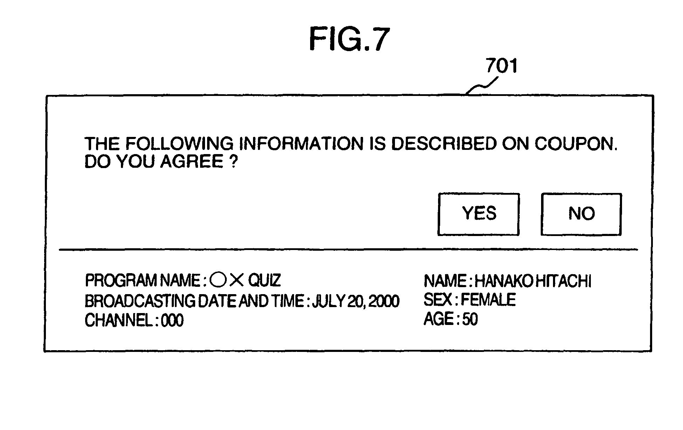

Next, the second embodiment of the present invention will be discussed with reference to Fig. 6. In Fig. 6, the same devices and same processes to those in Fig. 1 will be identified by the same reference numerals, and the following discussion will be given for different processes. What is different from the first embodiment, the issuance of the coupon is not performed by the service center 60 but is performed by the broadcasting/transmitting system 20. Namely, the broadcasting/transmitting system 20 receives the coupon 66 from the service center 60 and broadcasts or transmits the coupon 66 to the receiving system 30 (coupon transmitting process 601). Upon storing the coupon 66 in the receiver 31 or upon downloading the coupon from the receiver 31 to the IC card 38, the data corresponding to the distribution history data (information upon issuance) 201 is added to the coupon as additive information (distribution information embedding process 602). When use-checked coupon is received, the service center 60 generates the distribution history 65 of the coupon and performs the analysis (analyzing process 70). Similarly to the first embodiment, the coupon 66 is downloaded to the IC card 38, the cellular telephone or portable information terminal, or is printed on the paper. When the coupon is printed on the paper, the additive information may also be printed or the additive information may be embedded using the electronic watermark technology in order to prevent to be easily read. It should be noted that, for adding the information managed by the service center 60 to the coupon, the personal information has to be embedded in the coupon. Therefore, as shown in a display screen 701 of Fig. 7, a function for requiring to the audience 30 the confirmation that the personal information is written in the coupon is provided. On the other hand, in order to avoid the third party to see the content of the coupon when the coupon is lost or to avoid the store to see the content of the coupon, it is preferred to encrypt the additive information.

With the second embodiment, the information of the non-use person of the coupon cannot be analyzed. However, the audience may eliminate trouble for requesting the issuance of the coupon to the center.

With the first and second embodiments, the information of the program broadcasted the coupon is added to the coupon. Thus, interest to the program can be statistically processed per age group. Therefore, the advertisement effect of the program can be directly appreciated. On the other hand, not only the statistical information of the overall audiences but the personal information, such as the taste or the like may also be analyzed from the tendency of the watched programs and the use of coupons to permit one-to-one marketing. Furthermore, the present invention is effective in providing new broadcasting advertisement method for continuing broadcasting of advertisement until a predetermined advertisement effect can be obtained, in such a manner that the broadcasting of coupon is continued until a given number of coupons are collected.

For the audience, the coupon information can be obtained through broadcasting which is a general medium. On the other hand, the coupon can be used in a form of either paper or electronic data. Even in case of electronic data, the use equipment can be freely selected. Therefore, the coupon can be easily used.

## Claims

1. A coupon management system for managing the number of issued coupons (66), comprising:
a storage device (68) for storing said coupon;
coupon issuance receiving means for receiving a coupon issuance request (33) generated on the basis of a coupon information broadcast or transmitted together with a program or a commercial message for requesting issuance of said coupon; and
coupon issuing means (61) for selecting a coupon corresponding to said coupon issuance request from said storage device and issuing the coupon;
**characterized by** analyzing means (70) for calculating the number of coupons issued for each program or commercial message on the basis of an identifier attached to said coupon issuance request by a receiver (31) receiving said program or commercial message and identifying said program or commercial message.

2. The system of claim 1, wherein said coupon issuance request includes at least one information on the channel through which said coupon information is broadcast or transmitted by the receiver receiving said program or commercial message and the timing or time when said coupon information is broadcast or transmitted by the receiver.

3. The system of claim 1, wherein said coupon issuance request includes at least one of name, address or residence, contact address, age, sex of the person who transmitted the coupon information via the receiver receiving said program or commercial message.

4. The system of claim 1, further comprises use-checked coupon receiving means (69) for receiving a use status of the coupon for identifying that said coupon is used;
wherein said analyzing means (70) calculates the number of coupons used for each program or commercial message on the basis of the use status of said coupon.

5. The system of claim 4, wherein said analyzing means calculates the period from the time of issuance of said coupon to the time of use on the basis of the timing when said coupon is issued and the timing when said coupon is used.

6. The system of claim 1, wherein said coupon information is broadcast through a data broadcasting channel.

7. The system of claim 1, further comprising:
coupon information broadcasting/transmitting means (22) for broadcasting or transmitting a coupon information for requesting issuance of a coupon (66), together with said program or commercial message; and
broadcasting/transmitting management means (24) for determining a period, a number of times or a fee for broadcasting or transmitting said program or commercial message on the basis of the number of issued coupons.

8. The system of claim 1, further comprising:
use-checked coupon receiving means (69) for receiving use-checked coupons used and checked by a coupon affiliated store terminal (50);
wherein said analyzing means (70) calculates the number of coupons used, instead of the number of coupons issued, for each program or commercial message on the basis of an identifier attached to said coupon by a receiver (31) receiving said program or commercial message and identifying said program or commercial message.

9. The system of claim 7, wherein said coupon is added with an audience attribute including at least one of name, address, residence, contact address, age, sex of a person receiving said coupon through a receiver receiving said program or commercial message.

10. The system of claim 8, further comprising:
coupon broadcasting/transmitting means (22) for broadcasting or transmitting a coupon (66) together with said program or commercial message;
coupon use number receiving means for receiving the number of used coupons from a service center (60) managing the number of coupons used for each program or commercial message; and
broadcasting/transmitting managing means for determining a period, a number of times or a fee for broadcasting or transmitting said program or commercial message on the basis of the number of used coupons.

11. An audience rate survey method for surveying an audience rate of a program or commercial message, comprising the steps of:
receiving a coupon issuance request generated on the basis of coupon information broadcast or transmitted together with said program or commercial message for requesting issuance of a coupon (66); and
issuing a coupon on the basis of said coupon issuance request;
**characterized by**
calculating the number of coupons issued for each program or commercial message on the basis of an identifier attached to said coupon issuance request by said receiver receiving said program or commercial message and identifying said program or commercial message; and
calculating an audience rate of said program or commercial message on the basis of the number of the issued coupons.

12. The method of claim 11, comprising the step of:
receiving a use status of a coupon from a coupon affiliated store terminal (50), where the coupon broadcast or transmitted together with the program or commercial message is used, for identifying that said coupon is used;
wherein said coupon number calculating step calculates the number of coupons used, instead of the number of coupons issued, for each program or commercial message on the basis of an identifier attached to said coupon by a receiver receiving said program or commercial message and identifying the program or commercial message, and said use status of said coupon; and
wherein said audience rate calculating step calculates an audience rate of said program or commercial message on the basis of the number of used coupons instead of the number of issued coupons.

13. The method of claim 11, further comprising the steps of:
broadcasting or transmitting a coupon information for requesting an issuance of coupon (66) together with said program or commercial message;
receiving the number of issued coupons from a service center (60) managing the number of coupons issued for each program or commercial message; and
broadcasting or transmitting said program or commercial message until the number of issued coupons reaches a predetermined number.

14. The method of claim 12, comprising the steps of:
broadcasting or transmitting a coupon (66) together with said program or commercial message;
receiving the number of used coupons from a service center (60) managing the number of coupons used for each program or commercial message; and
broadcasting or transmitting said program or commercial message until the number of used coupons reaches a predetermined number.

## Patentansprüche

1. Gutschein-Verwaltungssystem zum Verwalten der Anzahl von ausgegebenen Gutscheinen (66) mit
einer Speichereinrichtung (68) zum Speichern des Gutscheins,
einer Gutscheinausgabe-Empfangseinrichtung zum Empfang einer Gutschein-Ausgabeaufforderung (33), die aufgrund einer zusammen mit einem Programm oder einer Werbesendung ausgestrahlten oder übertragenen Gutscheininformation zur Aufforderung einer Ausgabe des Gutscheins erzeugt wird, und
einer Gutschein-Ausgabeeinrichtung (68) zum Auswählen eines Gutscheins aus der Speichereinrichtung entsprechend der Gutschein-Ausgabeaufforderung sowie zum Ausgeben des Gutscheins,
**gekennzeichnet durch** eine Analysiereinrichtung (70) zum Berechnen der Zahl der ausgegebenen Gutscheine für jedes Programm bzw. jede Werbesendung aufgrund einer von einem Empfänger (31) des Programms bzw. der Werbesendung der Gutschein-Ausgabeaufforderung angefügten, das Programm bzw. die Werbesendung identifizierenden Kennung.

2. System nach Anspruch 1, wobei die Gutschein-Ausgabeaufforderung mindestens eine Information über den Kanal enthält, über den die Gutscheininformation von dem Empfänger des Programms bzw. der Werbesendung ausgestrahlt oder übertragen wurde, sowie über die Zeit oder den Zeitpunkt der Ausstrahlung oder Übertragung der Gutscheininformation durch den Empfänger.

3. System nach Anspruch 1, wobei die Gutschein-Ausgabeaufforderung von der Person, die die Gutscheininformation über den Empfänger des Programms bzw. der Werbesendung übertragen hat, mindestens eine der Informationen Name, Adresse oder Wohnort, Kontaktadresse, Alter, Geschlecht enthält.

4. System nach Anspruch 1 mit einer Empfangseinrichtung (69) für auf Benutzung geprüfte Gutscheine zum Empfang des Benutzungszustands des Gutscheins, um zu identifizieren, daß der Gutschein benutzt ist, wobei die Analysiereinrichtung (70) aufgrund des Benutzungszustands des Gutscheins die Zahl der benutzten Gutscheine für jedes Programm bzw. jede Werbesendung berechnet.

5. System nach Anspruch 4, wobei die Analysiereinrichtung aufgrund des Zeitpunktes, zu dem der Gutschein ausgegeben wird, und des Zeitpunktes, zu dem er benutzt wird, die Zeitspanne von der Ausgabe bis zur Benutzung des Gutscheins berechnet.

6. System nach Anspruch 1, wobei die Gutscheininformation über einen Datenübertragungskanal ausgestrahlt wird.

7. System nach Anspruch 1 mit
einer Gutscheininformations-Ausstrahl/Übertragungseinrichtung (22) zum Ausstrahlen oder Übertragen einer Gutscheininformation zur Anforderung der Ausgabe eines Gutscheins (66) zusammen mit dem Programm bzw. der Werbesendung und
einer Ausstrahlungs/Übertragungs-Verwaltungseinrichtung (24) zum Bestimmen des Zeitraums, der Häufigkeit oder einer Gebühr für die Ausstrahlung oder Übertragung des Programms bzw. der Werbesendung aufgrund der Zahl der ausgegebenen Gutscheine.

8. System nach Anspruch 1 mit einer Empfangseinrichtung (69) für auf Benutzung geprüfte Gutscheine zum Empfang von auf Benutzung geprüften Gutscheinen, die benutzt und von einem Endgerät (50) eines bezüglich des Gutscheins angeschlossenen Geschäfts geprüft wurden,
wobei die Analysiereinrichtung (70) aufgrund einer von einem Empfänger (31) des Programms bzw. der Werbesendung dem Gutschein angefügten, die Werbesendung identifizierenden Kennung für jedes Programm bzw. jede Werbesendung die Zahl der benutzten Gutscheine anstelle der Zahl der ausgegebenen Gutscheine berechnet.

9. System nach Anspruch 7, wobei dem Gutschein ein Zuschauerattribut ängefügt ist, das von der Person, die den Gutschein über einen Empfänger des Programms bzw. der Werbesendung empfängt, mindestens eine der Informationen Name, Adresse, Wohnort, Kontaktadresse, Alter, Geschlecht enthält.

10. System nach Anspruch 8 mit
einer Gutschein-Ausstrahl/Übertragungseinrichtung (22) zum Ausstrahlen bzw. Übertragen eines Gutscheins (66) zusammen mit dem Programm bzw der Werbesendung,
einer Gutscheinbenutzungszahl-Empfangseinrichtung zum Empfang der Zahl der benutzten Gutscheine von einer Dienstzentrale (60), die die Zahl der benutzten Gutscheine für jedes Programm bzw. jede Werbesendung verwaltet, und
eine Ausstrahlungs/Übertragungs-Verwaltungseinrichtung zum Bestimmen des Zeitraums, der Häufigkeit oder einer Gebühr für die Ausstrahlung bzw. Übertragung des Programms bzw. der Werbesendung aufgrund der Zahl der benutzten Gutscheine.

11. Zuschauerfrequenz-Erhebungsverfahren zum Erheben der Zuschauerfrequenz für ein Programm oder eine Werbesendung, wobei
eine Gutschein-Ausgabeaufforderung empfangen wird, die aufgrund einer zusammen mit dem Programm bzw. der Werbesendung ausgestrahlten Gutscheininformation erzeugt wird, um die Ausgabe eines Gutscheins (66) anzufordern, und
aufgrund der Gutschein-Ausgabeaufforderung ein Gutschein ausgegeben wird,
**dadurch gekennzeichnet, daß**
aufgrund einer vom Empfänger des Programms bzw. der Werbesendung der Gutschein-Ausgabeaufforderung angefügten, das Programm bzw. die Werbesendung identifizierenden Kennung die Zahl der für jedes Programm bzw. jede Werbesendung ausgegebenen Gutscheine berechnet wird, und
aufgrund der Zahl der ausgegebenen Gutscheine die Zuschauerfrequenz für das Programm bzw. die Werbesendung berechnet wird.

12. Verfahren nach Anspruch 11, wobei
von einem Endgerät (50) eines bezüglich des Gutscheins angeschlossenen Geschäfts, wo der zusammen mit dem Programm bzw. der Werbesendung ausgestrahlte oder übertragene Gutschein benutzt wird, der Benutzungszustand des Gutscheins empfangen wird um zu identifizieren, daß der Gutschein benutzt wird,
aufgrund einer vom Empfänger des Programms bzw. der Werbesendung dem Gutschein angefügten, das Programm bzw. die Werbesendung identifizierenden Kennung sowie aufgrund des Benutzungszustands des Gutscheins die Zahl der benutzten Gutscheine anstelle der Zahl der ausgegebenen Gutscheine für jedes Programm bzw. jede Werbesendung berechnet wird, und
die Zuschauerfrequenz für das Programm bzw. die Werbesendung aufgrund der Zahl der benutzten Gutscheine anstelle der Zahl der ausgegebenen Gutscheine berechnet wird.

13. Verfahren, wobei ferner
eine Gutscheininformation ausgestrahlt oder übertragen wird, um die Ausgabe eines Gutscheins (66) zusammen mit dem Programm bzw. der Werbesendung anzufordern,
von einer die Zahl der für jedes Programm bzw. jede Werbesendung ausgegebenen Gutscheine verwaltenden Dienstzentrale (60) die Zahl der ausgegebenen Gutscheine empfangen wird, und
das Programm bzw. die Werbesendung ausgestrahlt oder übertragen wird, bis die Zahl der ausgegebenen Gutscheine eine vorgegebene Zahl erreicht.

14. Verfahren nach Anspruch 12, wobei ferner
ein Gutschein (66) zusammen mit dem Programm bzw. der Werbesendung ausgestrahlt oder übertragen wird,
die von einer die Zahl der benutzten Gutscheine für jedes Programm bzw. jede Werbesendung verwaltenden Dienstzentrale (60) Zahl der benutzten Gutscheine empfangen wird, und
das Programm bzw. die Werbesendung ausgestrahlt oder übertragen wird, bis die Zahl der benutzten Gutscheine eine vorgegebene Zahl erreicht.

## Revendications

1. Système de gestion de coupons pour gérer le nombre de coupons émis (66), comportant :
un dispositif de mémorisation (68) pour mémoriser ledit coupon,
des moyens de réception d'émission de coupon pour recevoir une demande d'émission de coupon (33) générée sur la base d'informations de coupon diffusées ou transmises conjointement avec un programme ou un message commercial pour demander l'émission dudit coupon, et
des moyens d'émission de coupon (61) pour sélectionner un coupon correspondant à ladite demande d'émission de coupon depuis ledit dispositif de mémorisation et émettre le coupon,
**caractérisé par** des moyens d'analyse (70) pour calculer le nombre de coupons émis pour chaque programme ou message commercial sur la base d'un identifiant associé à ladite demande d'émission de coupon par un récepteur (31) recevant ledit programme pu message commercial et identifiant ledit programme ou message commercial.

2. Système selon la revendication 1, dans lequel ladite demande d'émission de coupon inclut au moins une information sur le canal à travers lequel lesdites informations de coupon sont diffusées ou transmises par le récepteur recevant ledit programme ou message commercial et l'heure ou l'instant auquel lesdites informations de coupon sont diffusées ou transmises par le récepteur.

3. Système selon la revendication 1, dans lequel ladite demande d'émission de coupon inclut au moins une information parmi le nom, l'adresse ou la résidence, l'adresse de contact, l'âge, le sexe de la personne qui a transmis les informations de coupon via le récepteur recevant ledit programme ou message commercial.

4. Système selon la revendication 1, comportant en outre des moyens de réception de coupon à utilisation contrôlée (69) pour recevoir un état d'utilisation du coupon afin d'identifier que ledit coupon est utilisé,
dans lequel lesdits moyens d'analyse (70) calculent le nombre de coupons utilisés pour chaque programme ou message commercial sur la base de l'état d'utilisation dudit coupon.

5. Système selon la revendication 4, dans lequel lesdits moyens d'analyse calculent la période depuis l'instant d'émission dudit coupon jusqu'à l'instant d'utilisation sur la base de l'heure à laquelle ledit coupon est émis et de l'heure à laquelle ledit coupon est utilisé.

6. Système selon la revendication 1, dans lequel lesdites informations de coupon sont diffusées via un canal de diffusion de données.

7. Système selon la revendication 1, comportant en outre :
des moyens de diffusion/transmission d'informations de coupon (22) pour diffuser ou transmettre des informations de coupon afin de demander l'émission d'un coupon (66), conjointement avec ledit programme ou message commercial, et
des moyens de gestion de diffusion/transmission (24) pour déterminer une période, un nombre de fois ou un coût pour diffuser ou transmettre ledit programme ou message commercial sur la base du nombre de coupons émis.

8. Système selon la revendication 1, comportant en outre :
des moyens de réception de coupon à utilisation contrôlée (69) pour recevoir des coupons à utilisation contrôlée utilisés et contrôlés par un terminal de mémorisation associé au coupon (50),
dans lequel lesdits moyens d'analyse (70) calculent le nombre de coupons utilisés, à la place du nombre de coupons émis, pour chaque programme ou message commercial sur la base d'un identifiant associé audit coupon par un récepteur (31) recevant ledit programme ou message commercial et identifiant ledit programme ou message commercial.

9. Système selon la revendication 7, dans lequel ledit coupon est ajouté à un attribut d'audience incluant au moins une information parmi le nom, l'adresse, la résidence, l'adresse de contact, l'âge, le sexe d'une personne recevant ledit coupon via un récepteur recevant ledit programme ou message commercial.

10. Système selon la revendication 8, comportant en outre :
des moyens de diffusion/transmission de coupon (22) pour diffuser ou transmettre un coupon (66) conjointement avec ledit programme ou message commercial,
des moyens de réception de nombre de coupons utilisés pour recevoir le nombre de coupons utilisés en provenance d'un centre de service (60) gérant le nombre de coupons utilisés pour chaque programme ou message commercial, et
des moyens de gestion de diffusion/transmission pour déterminer une période, un nombre de fois ou un coût pour la diffusion ou la transmission dudit programme ou message commercial sur la base du nombre de coupons utilisés.

11. Procédé d'étude d'indice d'écoute pour étudier un indice d'écoute d'un programme ou message commercial, comportant les étapes consistant à :
recevoir une demande d'émission de coupon générée sur la base d'informations de coupon diffusées ou transmises conjointement avec ledit programme ou message commercial pour demander l'émission d'un coupon (66), et
émettre un coupon sur la base de ladite demande d'émission de coupon,
**caractérisé par** les étapes consistant à
calculer le nombre de coupons émis pour chaque programme ou message commercial sur la base d'un identifiant associé à ladite demande d'émission de coupon par ledit récepteur recevant ledit programme ou message commercial et identifiant ledit programme ou message commercial, et
calculer un indice d'écoute dudit programme ou message commercial sur la base du nombre de coupons émis.

12. Procédé selon la revendication 11, comportant l'étape consistant à :
recevoir un état d'utilisation d'un coupon en provenance d'un terminal de mémorisation associé au coupon (50), lorsque le coupon diffusé ou transmis conjointement avec le programme ou message commercial est utilisé, pour identifier que ledit coupon est utilisé,
dans lequel ladite étape de calcul de nombre de coupons calcule le nombre de coupons utilisés, à la place du nombre de coupons émis, pour chaque programme ou message commercial sur la base d'un identifiant associé audit coupon par un récepteur recevant ledit programme ou message commercial et identifiant le programme ou message commercial, et ledit état d'utilisation dudit coupon, et
dans lequel ladite étape de calcul d'indice d'écoute calcule un indice d'écoute dudit programme ou message commercial sur la base du nombre de coupons utilisés à la place du nombre de coupons émis.

13. Procédé selon la revendication 11, comportant en outre les étapes consistant à :
diffuser ou transmettre une information de coupon pour demander une émission de coupon (66) conjointement avec ledit programme ou message commercial,
recevoir le nombre de coupons émis en provenance d'un centre de service (60) gérant le nombre de coupons émis pour chaque programme ou message commercial, et
diffuser ou transmettre ledit programme ou message commercial jusqu'à ce que le nombre de coupons émis atteigne un nombre prédéterminé.

14. Procédé selon la revendication 12, comportant les étapes consistant à :
diffuser ou transmettre un coupon (66) conjointement avec ledit programme ou message commercial,
recevoir le nombre de coupons utilisés en provenance d'un centre de service (60) gérant le nombre de coupons utilisés pour chaque programme ou message commercial, et
diffuser ou transmettre ledit programme ou message commercial jusqu'à ce que le nombre de coupons utilisés atteigne un nombre prédéterminé.
